# EUROPÄISCHE PATENTANMELDUNG

(11) **EP 3 043 085 A1**
(43) Veröffentlichungstag der Anmeldung: **13.07.2016**
(21) Anmeldenummer: 15150458.6
(22) Anmeldetag: 08.01.2015
(51) Int. Cl.: F16F 1/10, F01D 5/22, F01D 11/00, F16F 7/08, F16F 7/10

(54) **Schaufelanordnung für eine axial durchströmbare thermische Strömungsmaschine sowie Verfahren zur Montage eines Dämpferelements zwischen zwei Schaufeln eines Schaufelkranzes einer thermischen Strömungsmaschine**

(71) Anmelder: Siemens Aktiengesellschaft, 80333 München (DE)
(72) Erfinder: Ahmad, Fathi, 41564 Kaarst (DE)

(57) **Zusammenfassung**

Insgesamt wird mit der Erfindung somit eine Schaufelanordnung (10) einer axial durchströmbaren thermischen Strömungsmaschine, umfassend einen rotierbaren Schaufelträger (18) mit einer Vielzahl entlang seiner Rotationsrichtung angeordneter Schaufeln, welche jeweils aufeinanderfolgend einen Schaufelfuß, eine Plattform (12) und ein Schaufelblatt umfassen und gemeinschaftlich einen Schaufelkranz bilden und bei dem zwei unmittelbar benachbarte Schaufeln des betreffenden Schaufelkranzes zu einem Schaufelpaar zusammenfassbar sind, wobei jedem Schaufelpaar jeweils ein Dämpferelement (20) zugeordnet ist, welches zumindest bei einer Rotation des Schaufelträgers (18) um eine Rotorachse mit den Plattformen (12) der beiden Schaufeln des ihm zugeordneten Schaufelpaares in Kontakt tritt. Um die Dämpfungswirkung von zwischen den Schaufeln angeordneten Dämpfungselementen zu vergrößern, ist vorgesehen, dass zumindest eines der Dämpferelemente als Rollfeder ausgestaltet ist.

## Beschreibung

Die Erfindung betrifft eine Schaufelanordnung einer axial durchströmbaren thermischen Strömungsmaschine, umfassend einen rotierbaren Schaufelträger mit einer Vielzahl entlang seiner Rotationsrichtung angeordneter Schaufeln, welche jeweils aufeinanderfolgend einen Schaufelfuß, eine Plattform und ein Schaufelblatt umfassen und gemeinschaftlich einen Schaufelkranz bilden und bei dem zwei unmittelbar benachbarte Schaufeln des betroffenen Schaufelkranzes zu einem Schaufelpaar zusammenfassbar sind, wobei jedem Schaufelpaar jeweils ein Dämpferelement zugeordnet ist, welches zumindest bei einer Rotation des Schaufelträgers um seine Rotationsachse aufgrund der dabei entstehenden Fliehkraft mit den Plattformen der beiden Schaufeln des ihm zugeordneten Schaufelpaares sich in Kontakt befindet. Weiter betrifft die Erfindung ein Verfahren zur Montage eines Dämpferelements zwischen zwei Schaufeln eines Schaufelkranzes einer thermischen Strömungsmaschine.

Es ist bekannt, Schaufelanordnungen, die in thermischen Strömungsmaschinen wie etwa Gasturbinen verwendet werden, mit Dämpfungselementen zu versehen. Diese dienen zur Dämpfung unerwünschter Biege- und Torsionsschwingungen, die während des Betriebes in der Strömungsmaschine durch unterschiedliche Anregungen auftreten können. Auf diese Weise können durch zu hohe Schwingungsfrequenzen bedingte HCF-Schäden (Abkürzung für "High Cycle Fatigue") vermieden werden, die als frühzeitige Materialermüdung zu einer verkürzten Lebensdauer der Schaufeln bzw. der Schaufelanordnung führen können. Die Dämpfungselemente werden zwischen den einzelnen Schaufeln angeordnet. Als Dämpfungselement werden in der Regel lose Drähte verwendet, die im Ruhezustand zunächst zwischen den Schaufelfüßen der Laufschaufeln am Rotor oder auf entsprechenden Tragstrukturen aufliegen und während des Betriebs aufgrund der in radialer Richtung wirkenden Zentrifugalkraft gegen die Unterseite von Schaufelplattformen benachbarter Schaufeln gedrückt werden. Jedes Dämpfungselement steht dann zur gleichen Zeit mit beiden benachbarten Schaufelplattformen in Kontakt. Hierdurch kann die kinetische Energie des Schaufelpaares einer aufgrund von Vibrationen hervorgerufenen Relativbewegung in Wärmeenergie umgewandelt werden, die in Folge der Reibung zwischen den jeweiligen Schaufelplattformen und dem anliegenden Dämpfungselement auftritt. Dieser Effekt dämpft die Schaufelschwingungen und führt insgesamt zu einer verminderten Belastung der Schaufelanordnung.

Aus der Druckschrift EP 1 154 125 A2 ist eine derartige Schaufelanordnung bekannt, wobei wenigstens zwei Dämpfungselemente zwischen benachbarten Schaufeln in Umfangsrichtung des Rotors hintereinander angeordnet sind, um eine wirksame Dämpfung der betroffenen Schaufeln zu erzielen. Die in dieser Druckschrift offenbarten Dämpfungselemente sind in voneinander abweichender Form ausgeführt, um möglichst eine Vielzahl unterschiedlicher Schwindungsmoden dämpfen zu können. Über die sich zwischen den Dämpfungselementen und den Schaufeln und ferner über die sich zwischen den einzelnen Dämpfungselementen ausgebildeten Kontaktbereiche kann zur Schwingungsdämpfung Schwingungsenergie in Wärmeenergie umgewandelt werden. Jedoch weisen die sich zwischen den einzelnen Dämpfungselementen ausgebildeten Kontaktbereiche lediglich die Form eines Linienkontakts auf, mit dem eine nur mäßig ausgeprägte Dämpfungswirkung verbunden ist.

Der Erfindung liegt mithin die Aufgabe zugrunde, eine Schaufelanordnung mit Dämpfungselementen anzugeben, mit der unerwünschte Schwingungen noch wirksamer gedämpft und die Neigung der Schaufeln zur Schwingung aufgrund einer Anregung reduziert werden können.

Diese Aufgabe wird durch eine Schaufelanordnung gemäß den Merkmalen des Anspruchs 1 gelöst.

Erfindungsgemäß ist bei der eingangs genannten Schaufelanordnung vorgesehen, dass zumindest eines der Dämpferelemente zur Dämpfung der Schaufeln als Rollfeder ausgestaltet ist.

Der Erfindung liegt die Erkenntnis zugrunde, dass aufgrund der Ausgestaltung des Dämpferelementes als Rollfeder die effektive Reibfläche signifikant erhöht werden kann. Die Rollfeder wird durch ein aufgewickeltes Metallband repräsentiert, dessen abgewickelte Länge in Wickelrichtung so gewählt ist, dass diese signifikant größer ist als der Umfang der fertigen Rollfeder. Dadurch entstehen Rollfedern mit mehreren Lagen, wobei die Lagenzahl jedoch von der Dicke des Metallbands abhängt und nur in Einzelfällen mehr als 10 Lagen beträgt.

Die Vergrößerung der Reibfläche erfolgt dadurch, dass die unterschiedlichen Lagen der Rollfeder ebenso aneinander reiben können wie die aneinander liegenden Flächen von Rollfeder und Plattformen, an denen die Rollfeder zumindest unter Fliehkraft anliegt. Die vergrößerten Reibflächen führen hier zu einer effizienteren Dämpfung von ggf. auftretenden Schaufelschwingungen, so dass die erfindungsgemäße Lösung effizienter unerwünschten Phänomenen entgegenwirken kann als die im Stand der Technik bekannten Lösungen.

Vorteilhafte Ausgestaltungen der Erfindung sind in den Unteransprüchen angegeben.

Gemäß einer ersten vorteilhaften Ausgestaltung der Erfindung umfassen die betreffenden Dämpferelemente zur Ausbildung als Rollfeder jeweils einen aufgewickelten Metallstreifen umfassend einem inneren Ende und einem äußeren Ende, wobei das jeweilige innere Ende gekröpft ist und/oder das jeweilige äußere Ende sich tangential von einer darunter angeordneten Lage des Metallstreifens weg erstreckt.

Die Kröpfung des inneren Endes ermöglicht eine einfachere Handhabung des Dämpferelementes, insbesondere bei dessen Montage: dem Einsetzen des Dämpferelementes in einen Freiraum zwischen den Plattformen zweier unmittelbar benachbarten Schaufeln eines Schaufelkranzes und der radial weiter innen angeordneten Trägerstruktur besagter Schaufeln. Wenn das jeweilige äußere Ende sich tangential von einer darunter angeordneten Lage des Metallstreifens wegerstreckt, so ermöglicht dieses äußere Ende eine flächige Anlage an einer ebenso flach ausgeführten Oberfläche der Plattformunterseite der betreffenden Schaufel, was dazu führt, dass das besagte Dämpferelement an der einen Schaufel flächig anliegt und an der anderen Schaufel eher linienartig. Diese Kombination der Anlagebereiche (einmal flächig, einmal linienhaft) vermeidet eine Unter- bzw. Überbestimmung der Anlage des Dämpfers, so dass dessen Wirkung im Vorhinein besser berechnet werden kann.

Gemäß einer weiteren vorteilhaften Ausgestaltung weisen die betreffenden Dämpferelemente einen äußeren Durchmesser auf, der kleiner ist als ihre axiale Erstreckung. Damit können sich die für die zur Dämpfung vorgesehenen Dämpferelemente sich von bekannten Rollfedern unterscheiden, da diese andere Proportionen aufweisen als diese bevorzugte Ausgestaltung. Nichtsdestotrotz ist es möglich, bereits verfügbare Rollfedern, deren axiale Erstreckung geringer ist als ihr Durchmesser, in der Schaufelanordnung verwendet werden, wobei dann ggf. mehrere konventionelle Rollfedern in die vorgesehene Position nebeneinander einzubringen sind. Es hat sich gezeigt, dass das Verhältnis von der axialen Erstreckung bezogen auf den äußeren Durchmesser im Intervall zwischen 5 und 20 liegt und weiter bevorzugt von der Geometrie der Schaufeln und Plattformlänge abhängt.

Weiter bevorzugt ist eine Schaufelanordnung, bei der im Inneren der betreffenden Dämpferelemente ein Draht eingelegt ist. Aufgrund der Ausgestaltung der Dämpferelemente als Rollfedern weisen diese herstellungsbedingt entlang ihrer Mittelachse einen Freiraum auf. Wenn dieser Freiraum zumindest teilweise, nach Möglichkeit sogar weitest möglich oder gar vollständig durch einen Draht ausgefüllt ist, kann die Masse des dann zweiteiligen Dämpferelements annähernd so groß gehalten werden, wie bei einem bisher einstückigen Dämpferdraht vergleichbarer Baugröße. Die Erhöhung der Masse durch das Einsetzten des Drahts in das Innere des als Rollfeder ausgestalteten Dämpferelements erhöht weiter dessen Dämpfungswirkung in bekannter Art und Weise.

Gemäß einer weiteren bevorzugten Ausgestaltung können die betreffenden Dämpferelemente auch so angerordnet sein, dass sie fliehkraftfrei vorgespannt an dem Schaufelträger und an den beiden Schaufeln des ihm zugeordneten Schaufelpaares anliegen. Um diese Anordnung herzustellen, wird vorgeschlagen, dass nach dem Bereitstellen des Schaufelkranzes und der Rollfeder der Außendurchmesser der Rollfeder durch ein weiteres Aufwickeln verkleinert wird und anschließend die so verkleinerte Rollfeder in einen dafür vorgesehenen, zwischen zwei Schaufeln und einem die Schaufel tragenden Schaufelträger angeordneten Raum eingesetzt wird. Nach dem Einsetzen der verkleinerten Rollfeder darf sie sich wieder entspannen, derart, dass sie vorgespannt sowohl am Schaufelträger als auch an den beiden Schaufeln und insbesondere deren Plattformen anliegt. Dies hat zur Folge, dass die Schaufeln, sofern sie mit Spiel in den bekannten Haltenuten sitzen, in eine definierte Position gepresst werden. Dies gilt sowohl für den Rotationsbetrieb als auch für den Stillstand des Rotors, was dazu führt, dass beim Anfahren etwaige Klappergeräusche aufgrund eines bisher spielbehafteten Sitzes der Schaufeln in den entsprechenden Tannenbaumnuten vermieden werden kann.

Besonders bevorzugt ist die Verwendung der erfindungsgemäßen Schaufelanordnung und ihrer vorteilhaften Ausgestaltung bei Schaufeln, die als Turbinenschaufeln ausgebildet sind, so dass die Schaufelanordnung als Turbinenschaufelanordnung ausgestaltet ist. Die Turbinenschaufelanordnung kann insbesondere die einer stationären Gasturbine sein.

Bevorzugtermaßen sind die betreffenden Dämpferelemente an einer zum Schaufelfuß weisenden Oberfläche der jeweiligen Plattform anlegbar bzw. liegen sie an.

Insgesamt wird mit der Erfindung somit eine Schaufelanordnung einer axialen durchströmbaren thermischen Strömungsmaschine angegeben. Um die Dämpfungswirkung von zwischen den Schaufeln angeordneten Dämpfungselementen zu vergrößern, ist vorgesehen, dass zumindest eines der Dämpferelemente als Rollfeder ausgestaltet ist.

Nachfolgend werden mehrere Ausführungsbeispiele einer erfindungsgemäßen Schaufelanordnung anhand der beigefügten Zeichnungen näher erläutert.

Es zeigen:
- Figur 1: ein erstes Ausführungsbeispiel einer Schaufelanordnung mit einem erfindungsgemäßen Dämpfungselement,
- Figur 2: das erfindungsgemäße Dämpfungselement gemäß Figur 1 in einer perspektivischen Darstellung,
- Figur 3: ein zweites Ausführungsbeispiel eines Dämpfungselements mit einem inneren gekröpften Ende und
- Figur 4: ein zweites Ausführungsbeispiel einer erfindungsgemäßen Schaufelanordnung, bei dem im Inneren einer Rollfeder ein Draht eingelegt ist.

In allen Figuren sind identische Merkmale mit den gleichen Bezugszeichen versehen.

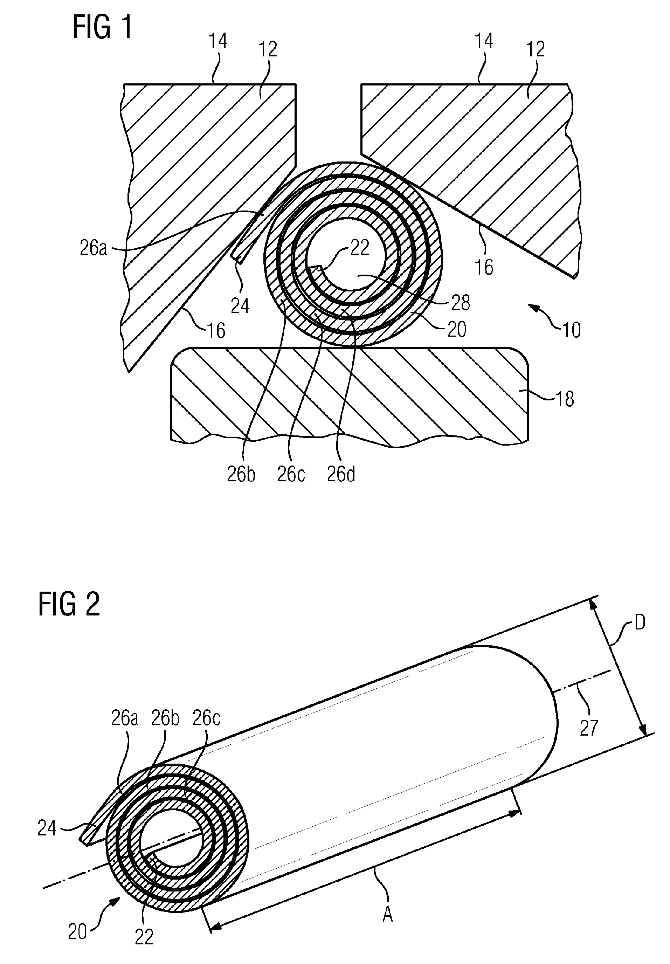

Figur 1 zeigt ein erstes Ausführungsbeispiel einer erfindungsgemäßen Schaufelanordnung 10. Die Figur 1 zeigt dabei einen Ausschnitt aus der Schaufelanordnung in einer Schnittebene senkrecht zur Rotationsachse. Dargestellt sind zwei einander spaltbildend gegenüberliegende Plattformen 12, an deren in Figur 1 nach oben weisenden Oberflächen 14 ein Arbeitsmedium im Wesentlichen in Richtung der Rotationsachse strömen kann. Wenn es sich bei der Schaufelanordnung um eine Turbinenschaufelanordnung handelt, kann das Arbeitsmedium ein Heißgas der Gasturbine sein. Jede Plattform 12 weist an ihrer der Oberfläche 14 gegenüberliegenden Seite eine dazu geneigte Oberfläche 16 auf. Gemäß dem gezeigten Ausführungsbeispiel sind die Oberflächen 16 in unterschiedlichen Winkeln zu den Oberflächen 14 den jeweiligen Plattformen 12 angeordnet. Beide Plattformen 12 sind jeweils Teil von einer nicht weiter dargestellten Schaufel der thermischen Strömungsmaschine desselben Schaufelkranzes, die in bekanntem Maße neben den Plattformen 12 auch aerodynamisch gekrümmte Schaufelblätter sowie einen Schaufelfuß umfassen. Die Schaufelfüße sind in bekannter Manier und deswegen nicht dargestellt, beispielsweise über Tannenbaumkonturen in dem Schaufelträger 18 verhakt, welcher beispielsweise als Rotorscheibe Teil des Rotors der thermischen Strömungsmaschine sein kann.

In dem von den Oberflächen 16 sowie vom Schaufelträger 18 im Wesentlichen begrenzten Raum ist ein als Rollfeder ausgestaltetes Dämpferelement 20 angeordnet. Das Dämpferelement 20 ist gemäß dem hier gezeigten Ausführungsbeispiel im Wesentlichen ein metallischer Streifen, der so aufgewickelt ist, dass dessen unterschiedliche Lagen 26a, 26b, 26c, 26d, die radial zueinander benachbart sind, aneinander liegen. Das Dämpferelement 20 umfasst ein inneres Ende 22 des Metallbandes sowie ein äußeres Ende 24.

Das Dämpferelement 20 liegt mit seinem äußeren Ende 24 an der in Figur 1 links dargestellten Oberfläche 16 flächig an, wohingegen das Dämpferelement 20 an der in Figur 1 rechts dargestellten Oberfläche 16 eher linienartig anliegt. Andere Kombinationen von Kontaktarten sind ebenfalls denkbar.

Das in Figur 1 dargestellte Dämpfungselement 20 ist in Figur 2 perspektivisch dargestellt. Von seinen Abmaßen ist es so proportioniert, dass der äußere Durchmesser D des Dämpfungselements 20 kleiner ist als die axiale Längserstreckung A des Dämpferelementes 20. In der Regel dürfte für das Verhältnis gelten: A = 10*D. Gut zu erkennen in Figur 2 ist, dass das äußere Ende 24 sich tangential von einer darunter angeordneten Lage 26 des Metallstreifens weg erstreckt und dass das Dämpferelement eine Mittelachse 27 umfasst.

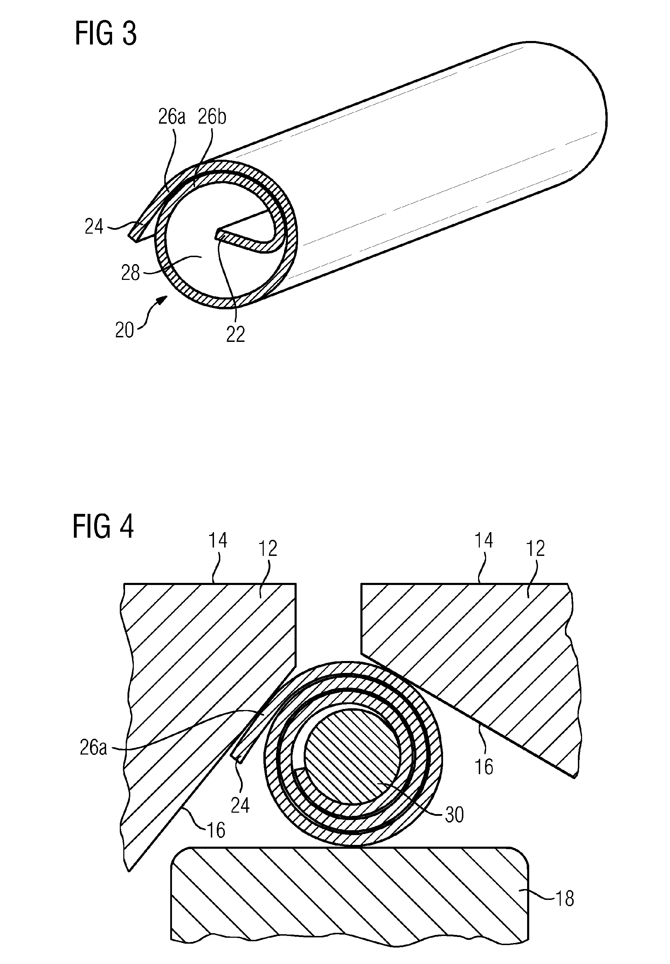

Um einen spielfreien und insbesondere verspannten Sitz des Dämpfungselements 20 in einer Schaufelanordnung zu ermöglichen, ist es von Vorteil, wenn das innere Ende 22 des Dämpfungselementes 20 - wie in Figur 3 dargestellt - gekröpft ausgestaltet ist. Die Kröpfung begünstigt und erleichtert das weitere Aufwickeln des Dämpfungselements auf einen Durchmesser, der geringfügig kleiner ist, als der im nicht eingebauten, entspannten Zustand. Ein derartig ausgewickeltes Dämpfungselement 20 kann dann zur Montage temporär fixiert und anschließend in seiner Bestimmungsposition montiert werden. Danach wird die Fixierung gelöst, so dass es sich dann an den Flächen 16 der beiden Plattformen benachbarter Schaufeln sowie an dem Schaufelträger 18 verspannt.

Um das Gewicht des Dämpfungselements 20 insgesamt zu erhöhen, ist es ebenso möglich, den im inneren des Dämpfungselements 20 vorhandenen Freiraum 28 durch das Einsetzen eines Drahts 30 zumindest teilweise zu belegen, um so die Dämpfungseffektivität aufgrund erhöhter Masse weiter zu verbessern. Der Draht kann dabei der Kontur des Inneren der Rollfeder angepasst sein, insbesondere dann, wenn der Draht in einem Dämpfer mit einem gekröpften inneren Ende 22 eingesetzt werden soll.

Obwohl die Erfindung im Detail durch die bevorzugten Ausführungsbeispiele, welche beliebig miteinander kombinierbar sind, näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schaufelanordnung (10) einer axial durchströmbaren thermischen Strömungsmaschine,
umfassend einen rotierbaren Schaufelträger (18) mit einer Vielzahl entlang seiner Rotationsrichtung angeordneter Schaufeln, welche jeweils aufeinanderfolgend einen Schaufelfuß, eine Plattform (12) und ein Schaufelblatt umfassen und gemeinschaftlich einen Schaufelkranz bilden und bei dem zwei unmittelbar benachbarte Schaufeln des betreffenden Schaufelkranzes zu einem Schaufelpaar zusammenfassbar sind, wobei jedem Schaufelpaar jeweils ein Dämpferelement (20) zugeordnet ist, welches zumindest bei einer Rotation des Schaufelträgers (18) um eine Rotorachse mit den Plattformen (12) der beiden Schaufeln des ihm zugeordneten Schaufelpaares in Kontakt tritt,
**dadurch gekennzeichnet, dass**
zumindest eines der Dämpferelemente als eine Rollfeder ausgestaltet ist.

2. Schaufelanordnung (10) nach Anspruch 1,
bei der die betreffenden Dämpferelemente (20) jeweils einen aufgewickelten Metallstreifen umfassend ein inneres Ende (22) und ein äußeres Ende (24) aufweisen,
wobei das jeweilige innere Ende (22) gekröpft ist und/oder deren jeweiliges äußere Ende (24) sich tangential von einer darunter angeordneten unteren Lage des Metallstreifens weg erstreckt.

3. Schaufelanordnung (10) nach Anspruch 1 oder 2,
bei der die betreffenden Dämpferelemente (20) einen äußeren Durchmesser (D) aufweisen, der kleiner ist als ihre axiale Erstreckung (A).

4. Schaufelanordnung (10) nach Anspruch 1, 2 oder 3,
bei der zumindest eines der betreffenden Dämpferelements (20) einen Draht (30) umfasst, welcher in das Innere des als Rollfeder ausgestalteten Dämpferelements eingelegt ist.

5. Schaufelanordnung (10) nach einem der Ansprüche 1 bis 4, bei der die betreffenden Dämpferelemente (20) fliehkraftfrei vorgespannt an dem Schaufelträger (18) und den beiden Schaufeln des ihm zugeordneten Schaufelpaares anliegen.

6. Schaufelanordnung (10) nach einem der Ansprüche 1 bis 5, deren Schaufeln unter Bildung einer Turbinenschaufelanordnung als Turbinenschaufeln ausgebildet sind.

7. Schaufelanordnung (10) nach einem der Ansprüche 1 bis 6, bei der die betreffenden Dämpferelemente an einer zum Schaufelfuß weisenden Oberfläche (14) der jeweiligen Plattform anlegbar ist bzw. anliegt.

8. Verfahren zur Montage eines Dämpferelements (20) zwischen zwei Schaufeln eines Schaufelkranzes einer thermischen Strömungsmaschine mit den aufeinanderfolgenden Schritten:
a) Bereitstellen eines als Rollfeder ausgestalteten Dämpferelements (20) und Bereitstellen eines Schaufelkranzes,
b) Verkleinern des Außendurchmessers des Dämpferelements (20) durch weiteres Aufwickeln,
c) Einsetzen der verkleinerten Rollfeder (20) in einen dafür vorgesehenen, zwischen zwei Schaufeln und einem die Schaufeln tragenden Schaufelträger angeordneten Raum,
d) Entspannen der Rollfeder (20) derart, dass sie vorgespannt am Schaufelträger und den beiden Schaufeln anliegt.

9. Verfahren nach Anspruch 8,
bei dem nach Schritt D) ein Draht (30) zur Masseerhöhung in das Dämpfungselement (20) eingesetzt wird.

10. Verfahren nach Anspruch 8 oder 9,
durchgeführt zur Herstellung einer Schaufelanordnung (10) nach einem der Ansprüche 5, 6 oder 7.
